# EUROPÄISCHE PATENTSCHRIFT

(11) **EP 3 233 339 B1**
(45) Veröffentlichungstag und Bekanntmachung des Hinweises auf die Patenterteilung: **07.02.2024**
(21) Anmeldenummer: 15808672.8
(22) Anmeldetag: 15.12.2015
(51) Int. Cl.: B23B 27/08, B23B 29/04, B23B 27/04

(54) **SPANABHEBENDES WERKZEUG**
CUTTING TOOL
OUTIL D'USINAGE PAR ENLÈVEMENT DE COPEAUX

(30) Priorität: 18.12.2014 DE 102014119094
(43) Veröffentlichungstag der Anmeldung: 25.10.2017
(73) Patentinhaber: Hartmetall-Werkzeugfabrik Paul Horn GmbH, 72072 Tübingen (DE)
(72) Erfinder: LUIK, Matthias, 72766 Reutlingen (DE); HERRMANN, Daniel, 72116 Mössingen (DE)
(74) Vertreter: Witte, Weller & Partner Patentanwälte mbB
(86) Internationale Anmeldenummer: PCT/EP2015/079785
(87) Internationale Veröffentlichungsnummer: WO 2016/096852

(56) Entgegenhaltungen:
- BE-A1- 883 845
- CN-Y- 2 647 475
- SU-A1- 908 542
- US-A- 2 275 326
- US-A- 2 488 172
- US-A- 2 573 480
- US-A- 2 584 505
- US-A- 2 659 963
- US-A- 3 531 842

## Beschreibung

Die vorliegende Erfindung betrifft ein spanabhebendes Werkzeug. Gemäß dem Oberbegriff des Anspruchs 1 umfasst das erfindungsgemäße Werkzeug einen Schneideinsatz mit zumindest einer Schneide, einen Werkzeughalter mit einer Schneideinsatzaufnahme zur Aufnahme des Schneideinsatzes, ein im Wesentlichen keilförmiges Klemmelement und eine Schraube zum Befestigen des Klemmelements in der Schneideinsatzaufnahme und gleichzeitigen Verklemmen des Schneideinsatzes in dem Werkzeughalter. Der Werkzeughalter erstreckt sich im Wesentlichen entlang einer Halterlängsachse. Die Schneideinsatzaufnahme ist an einem werkstückseitigen Ende angeordnet und weist einen oberen Klemmfinger und eine unteren Klemmbacke auf. Der Werkzeughalter weist ferner ein erstes Innengewinde auf. Das Klemmelement ist zum Verklemmen des Schneideinsatzes im Werkzeughalter in der Schneideinsatzaufnahme befestigbar, wobei das Klemmelement an einer Oberseite einen ersten Anlageabschnitt zur Anlage an dem Schneideinsatz und an einer der Oberseite gegenüberliegenden Unterseite einen zweiten Anlageabschnitt zur Anlage an der unteren Klemmbacke aufweist, wobei sich der erste Anlageabschnitt im Wesentlichen entlang einer ersten Anlageachse und der zweite Anlageabschnitt im Wesentlichen entlang einer zweiten Anlageachse erstreckt. Ferner weist das Klemmelement eine Durchgangsbohrung auf. Das Klemmelement ist in montiertem Zustand des Werkzeugs zwischen dem Schneideinsatz und der unteren Klemmbacke des Werkzeughalters angeordnet und die Schraube greift durch die Durchgangsbohrung hindurch in das erste Innengewinde ein.

Ein solches Werkzeug gemäß dem Oberbegriff des Anspruchs 1 ist bereits aus der US 2,659,963 A bekannt.

Spanabhebende Werkzeuge dieser Art kommen meist bei Anwendungen zur Metallbearbeitung, insbesondere bei Fräs- oder Drehanwendungen, zum Einsatz. Spanabhebende Werkzeuge gemäß der vorliegenden Erfindung werden insbesondere zum Einstechdrehen oder Längsdrehen verwendet.

Um optimale Zerspanungseigenschaften zu gewährleisten ist ein aus mechanischer Sicht stabiler Plattensitz, also eine mechanisch stabile Aufnahme des Schneideinsatzes innerhalb des Werkzeughalters, von immenser Wichtigkeit. Die verwendeten Schneideinsätze werden dazu meist in einer im Werkzeughalter vorgesehenen Schneideinsatzaufnahme zwischen einem oberen Klemmfinger und einer unteren Klemmbacke eingespannt bzw. geklemmt gehalten. Ein weiterer wichtiger Aspekt, den es zu gewährleisten gilt, ist eine einfache und schnelle Austauschbarkeit des Schneideinsatzes, da dieser aufgrund von Verschleiß häufig ausgetauscht werden muss.

Für die Art der Einspannung des Schneideinsatzes im Werkzeughalter existiert im Stand der Technik bereits eine Vielzahl verschiedenster Lösungen.

Aus der DE 10 2006 059 717 A1 ist beispielsweise ein Werkzeug bekannt, bei dem der Schneideinsatz in einer Schneideinsatzaufnahme mit Hilfe einer Klemmschraube eingespannt wird. Im oberen Klemmfinger ist dazu ein Trennschlitz vorgesehen, welcher es ermöglicht, den oberen Klemmfinger beim Einschrauben der Spannschraube zumindest teilweise zu verformen, um diesen von oben auf den Schneideinsatz zu drücken.

Weitere beispielhafte Werkzeuge, welche Klemmelemente zum Verklemmen des Schneideinsatzes im Werkzeughalter verwenden, sind aus der US 2,275,326 A, der US 2,488,172 A, der BE 883 845 A1, der US 2,584,505 A, der US 2,573,480 A und der US 3,531,842 A bekannt.

Die EP 0 095 062 B1 zeigt ein Werkzeug, bei dem der Schneideinsatz ohne die Hilfe einer zusätzlichen Klemmschraube zwischen dem oberen Klemmfinger und der unteren Klemmbacke eingespannt wird. Die darin gezeigte Art der Einspannung bedient sich des Prinzips der Selbstklemmung, wobei der obere Klemmfinger aufgrund seiner Vorspannung ähnlich wie eine Feder von oben auf den Schneideinsatz drückt. Wenngleich für die Einspannung keine extra Spannschraube benötigt wird, ist ein derartiges Werkzeug jedoch aus vielerlei Hinsicht von Nachteil. Zum einen stößt die selbstklemmende Einspannung bei höheren Bearbeitungskräften an ihre Grenzen. Zum anderen ist im Werkzeughalter ebenfalls eine Art Klemmschlitz vorzusehen, um die federnde bzw. selbstklemmende Eigenschaft des oberen Klemmfingers zu gewährleisten. Solche Klemmschlitze können, je nach Geometrie, in der Fertigung durchaus aufwändig sein. Im Übrigen ist auch die Austauschbarkeit des Schneideinsatzes nicht ohne weiteres einfach zu gewährleisten. Zum Austauschen des Schneideinsatzes muss nämlich ein extra Werkzeugschlüssel verwendet werden, mit Hilfe dessen der obere Klemmfinger aufgespreizt wird, um den Schneideinsatz vom Werkzeughalter zu lösen.

Eine weitere Befestigungsvariante eines Schneideinsatzes im Werkzeughalter ist aus der DE 10 2012 111 240 A1 bekannt. Dieses Dokument zeigt ein Werkzeug mit einem im Wesentlichen bogenförmigen Schneideinsatz, welcher in einer bogenförmigen Schneideinsatzaufnahme eingespannt wird. Der bogenförmige Schaft des Schneideinsatzes und die bogenförmige Schneideinsatzaufnahme sind dabei derart ausgestaltet, dass der Schneideinsatz beim Hineinschieben bzw. Hineindrehen in die Schneideinsatzaufnahme mit zunehmender Drehung im Werkzeughalter festgeklemmt wird. Wenngleich diese Art der Einspannung einen relativ stabilen Plattensitz ermöglicht, so ist ein derartiger Schneideinsatz bzw. eine derartige Schneideinsatzaufnahme aufgrund der bogenförmigen Geometrie fertigungstechnisch relativ aufwändig.

Insbesondere für den Bereich der Schwerzerspanung besteht daher Bedarf für alternative Arten der Einspannung eines Schneideinsatzes am Werkzeughalter, wobei die Einspannung einen extrem stabilen Plattensitz ermöglichen soll. Von Schwerzerspanung ist die Rede, wenn Werkstücke mit großen und wechselnden Aufmaßen, Bearbeitungstiefen über 25 mm und/oder Bearbeitungsbreiten größer < 8mm zerspant werden. Unter Schwerzerspanung wird auch die spannende Bearbeitung von schwer zerspanbaren Materialien wie Titan oder Nickel-Basis-Legierungen verstanden.

Der vorliegenden Erfindung liegt daher die Aufgabe zugrunde, ein spanabhebendes Werkzeug mit einer alternativen Art der Einspannung des Schneideinsatzes im Werkzeughalter bereitzustellen. Die Art der Einspannung sollte sich insbesondere für den Einsatz bei hohen Bearbeitungskräften eignen. Zudem sollte die Art der Einspannung eine einfache Austauschbarkeit des Schneideinsatzes gewährleisten sowie aus fertigungstechnischer Sicht einfach herstellbar sein.

Diese Aufgabe wird durch ein Werkzeug der eingangs genannten Art dadurch gelöst, dass die erste Anlageachse in montiertem Zustand des Werkzeugs quer zu der Halterlängsachse und die zweite Anlageachse parallel zu der Halterlängsachse des Werkzeughalters verläuft, und dass eine Längsachse der Durchgangsbohrung parallel zu der zweiten Anlageachse verläuft.

Die oben genannte Aufgabe wird dadurch vollständig gelöst.

Erfindungsgemäß wird also ein keilförmiges Klemmelement verwendet, welches mit Hilfe einer Schraube in der Schneideinsatzaufnahme des Werkzeughalters befestigbar ist. Dieses keilförmige Klemmelement dient dem Verklemmen des Schneideinsatzes im Werkzeughalter. Das keilförmige Klemmelement ist ein separates Bauteil, welches gemeinsam mit dem Schneideinsatz in der Schneideinsatzaufnahme des Werkzeughalters befestigbar ist. Der Schneideinsatz selbst ist mit dem keilförmigen Klemmelement nicht fest verbunden. Zum Austauschen des Schneideinsatzes lässt sich das Klemmelement durch Lösen des Befestigungsmittels vom Werkzeughalter trennen, wodurch auch die Einspannung des Schneideinsatzes zwischen Klemmelement und Werkzeughalter gelöst wird und das Klemmelement von Hand oder maschinell entnehmbar ist.

Das Klemmelement des erfindungsgemäßen Werkzeugs wird vorliegend als "im Wesentlichen keilförmig" beschrieben, was sich insbesondere auf dessen geometrische Ausgestaltung in Seitenansicht betrachtet bezieht. Das Klemmelement ist in seiner Gesamtgeometrie vorzugsweise prismatisch ausgestaltet bzw. in der Seitenansicht trapezförmig.

Die erfindungsgemäße Verklemmung des Schneideinsatzes im Werkzeughalter mit Hilfe des keilförmigen Klemmelements erweist sich insbesondere aus folgenden Gründen als vorteilhaft: Zum einen wird durch diese Art der Verklemmung ein extrem stabiler Plattensitz realisiert. Das erfindungsgemäße Werkzeug eignet sich daher auch für die Schwerzerspanung. Zum anderen lässt sich das Werkzeug inklusive Werkzeughalter, Schneideinsatz und keilförmigem Klemmelement fertigungstechnisch relativ einfach und kostengünstig herstellen. Der Schneideinsatz lässt sich zudem nach Verschleiß oder aus sonstigen Gründen relativ einfach mit wenigen Handgriffen vom Werkzeughalter lösen. Sowohl der obere Klemmfinger als auch die untere Klemmbacke können starr ausgestaltet sein, was sich vorteilhaft auf deren mechanische Stabilität auswirkt.

Gemäß einer bevorzugten Ausgestaltung erstreckt sich das Klemmelement ausgehend von einem vorderen Ende des Klemmelements entlang einer Längsachse des Klemmelements hin zu einem hinteren Ende des Klemmelements, wobei die Längsachse in montiertem Zustand des Werkzeugs vorzugsweise parallel zur Halterlängsachse ausgerichtet ist und das hintere Ende auf einen Grund der Schneideinsatzaufnahme zuweist, und wobei sich das Klemmelement in seiner Höhe senkrecht zur Längsachse zum hinteren Ende hin keilförmig verjüngt.

Die Breite des Klemmelements, welche ebenfalls senkrecht zur Längsachse des Klemmelements gemessen wird, ist vorzugsweise konstant entlang der gesamten Längsachse des Klemmelements. Die Höhe des Klemmelements, welche senkrecht zur Längsachse des Klemmelements und senkrecht zur Breite des Klemmelements gemessen wird, nimmt ausgehend vom vorderen Ende hin zum hinteren Ende des Klemmelements vorzugsweise stetig ab. Hierdurch entsteht während des Befestigens des Klemmelements in der Schneideinsatzaufnahme eine Art Verkeilung des Schneideinsatzes, welche zum Verklemmen des Schneideinsatzes im Werkzeughalter führt. Während des Befestigens des Klemmelements wird das Klemmelement immer weiter in die Schneideinsatzaufnahme hineingezogen, wodurch die auf den Schneideinsatz ausgeübte Klemmkraft zunehmend erhöht wird.

Es sei darauf hingewiesen, dass die Höhe des Klemmelements ausgehend vom vorderen Ende hin zum hinteren Ende des Klemmelements nicht notwendigerweise stetig abnehmen muss. Grundsätzlich ist es auch denkbar, dass sich das Klemmelement nur abschnittsweise entlang der Längsachse des Klemmelements verjüngt.

Das Klemmelement ist in montiertem Zustand des Werkzeugs zwischen dem Schneideinsatz und der unteren Klemmbacke des Werkzeughalters angeordnet.

Das Klemmelement ist also unterhalb des Schneideinsatzes in der Schneideinsatzaufnahme angeordnet. Anstelle einer Anordnung oberhalb des Schneideinsatzes wird hierdurch der Vorteil erzielt, dass das Klemmelement auf der unteren Klemmbacke angeordnet ist, welche üblicherweise stabiler ausgestaltet ist als der obere Klemmfinger. Durch diese Ausgestaltung wird ebenso Platz im oberen Bereich der Schneideinsatzaufnahme gespart, sodass sich der obere Klemmfinger größer und stabiler ausbilden lässt. Dies ist insbesondere von Vorteil, da der obere Klemmfinger, im Gegensatz zu den meisten aus dem Stand der Technik bekannten Werkzeugen, erfindungsgemäß vorzugsweise starr ausgestaltet ist, also nicht nachgiebig bzw. nicht aufspreizbar ist. Die Aufspreizbarkeit der Schneideinsatzaufnahme bzw. des oberen Klemmfingers ist schon allein aufgrund des Fehlens eines Trennschlitzes nicht gegeben.

Das Klemmelement weist an einer Oberseite einen ersten Anlageabschnitt zur Anlage am Schneideinsatz auf, welcher sich im Wesentlichen entlang einer ersten Anlageachse erstreckt. Zudem weist das Klemmelement einen zweiten Anlageabschnitt zur Anlage an der unteren Klemmbacke auf, welcher sich im Wesentlichen entlang einer zweiten Anlageachse erstreckt. Die beiden Anlageachsen schließen vorzugsweise einen Winkel kleiner 15° ein.

Das keilförmige Klemmelement verjüngt sich also vorzugsweise unter einem Winkel kleiner 15°. Dies hat insbesondere den Vorteil, dass es hierdurch zu einer sogenannten Selbsthemmung kommt. Diese Selbsthemmung führt dazu, dass der Schneideinsatz in vollständig montiertem Zustand des Werkzeugs, also wenn das Klemmelement vollständig in die Schneideinsatzaufnahme hineingeschoben ist, sich nicht ohne Weiteres von dem Werkzeughalter lösen lässt, auch wenn die Schraube gelöst ist. Der Schneideinsatz bleibt also mit anderen Worten in montiertem Zustand auch bei gelöster Schraube zwischen dem oberen Klemmfinger und dem keilförmigen Klemmelement verklemmt. Dies verhindert ein unbeabsichtigtes Hinausfallen des Schneideinsatzes, zum Beispiel während des Austauschens des Schneideinsatzes. Zur Realisierung dieser Selbsthemmung ist insbesondere ein Winkel zwischen erster und zweiter Anlageachse im Bereich von 5-10° erwünscht.

Der zweite Anlageabschnitt verläuft in montiertem Zustand des Werkzeugs parallel zur Halterlängsachse.

Die Kontaktflächen zwischen Klemmelement und unterer Klemmbacke des Werkzeughalters verlaufen also parallel zur Halterlängsachse. Der an der unteren Klemmbacke vorgesehene Anlageabschnitt, welcher mit dem am Klemmelement angeordneten zweiten Anlageabschnitt korrespondiert, lässt sich somit aus fertigungstechnischer Sicht einfach und kostengünstig herstellen, da dieser nicht geneigt sein muss. Im Übrigen wird durch eine gerade bzw. waagrechte Anlage des Klemmelements an der unteren Klemmbacke eine wirksame und gut verteilte Krafteinleitung in den Werkzeughalter realisiert.

Gemäß einer weiteren Ausgestaltung weist der erste Anlageabschnitt eine quer zur ersten Anlageachse verlaufende, nutförmige Ausnehmung, welche den ersten Anlageabschnitt in zwei Teilabschnitte unterteilt.

Diese Unterteilung des ersten Anlageabschnitts in zwei Teilabschnitte erweist sich insbesondere im Bezug auf die Stabilität der Anlage des keilförmigen Klemmelements am oberen Klemmfinger als vorteilhaft. Es entsteht nämlich eine definierte Anlage in zwei Teilbereichen, im Bereich des vorderen Endes des Klemmelements sowie im Bereich des hinteren Endes des Klemmelements. Hierdurch lassen sich auch Fertigungstoleranzen ausgleichen.

Gemäß einer weiteren Ausgestaltung weisen der erste und der zweite Anlageabschnitt senkrecht zur Längsachse des Klemmelements betrachtet jeweils einen prismatischen Querschnitt auf.

Der erste und zweite Anlageabschnitt wird vorzugsweise jeweils durch mindestens drei Flächen gebildet, welche zu dem prismatischen Querschnitt führen. Der hieraus entstehende prismatische Querschnitt der beiden Anlageabschnitte ist vorzugsweise symmetrisch ausgestaltet.

Die prismatischen Querschnitte können gemäß einer ersten Alternative als sogenannte Innenprismen ausgestaltet sein, d.h. durch eine nutförmige, prismatische Ausnehmung im Klemmelement gebildet sein. Gemäß einer zweiten Alternative können die prismatischen Querschnitte als sogenannte Außenprismen ausgestaltet sein, d.h. durch prismatische Erhöhungen am Klemmelement gebildet sein. Die Anlageabschnitte am Schneideinsatz bzw. an der unteren Klemmbacke sind korrespondierend dazu als prismatische Gegenstücke (Außenprismen oder Innenprismen) ausgestaltet.

Durch diese Art der Querschnitte lassen sich insbesondere Quer- und Scherkräfte wirksam aufnehmen, ohne dass es während der Bearbeitung zu einem unerwünschten Herauslösen des Schneideinsatzes und/oder des Klemmelements aus der Schneideinsatzaufnahme kommen kann. Dies trägt ebenfalls zu einem stabilen Plattensitz bei.

Die Schraube ist in montiertem Zustand des Werkzeugs parallel zur Halterlängsachse ausgerichtet.

Die Schraube lässt sich somit relativ einfach durch das Klemmelement hindurch in den Werkzeughalter einsetzten und festschrauben, um den Schneideinsatz mithilfe des Klemmelements im Werkzeughalter zu verklemmen. Das Klemmelement weist hierzu eine Bohrung auf, deren Bohrungsachse in montiertem Zustand vorzugsweise parallel zur Halterlängsachse ausgerichtet ist. Die Bohrung im Klemmelement ist als Durchgangsbohrung ausgebildet. Ersteres ist fertigungstechnisch einfacher zu realisieren.

Gemäß einer weiteren bevorzugten Ausgestaltung weist die Schraube ein erstes und ein zweites Außengewinde auf, wobei das in dem Werkzeughalter angeordnete erste Innengewinde mit dem ersten Außengewinde der Schraube korrespondiert, und wobei das Klemmelement ein zweites Innengewinde aufweist, welches mit dem zweiten Außengewinde korrespondiert. Das im Klemmelement angeordnete zweite Innengewinde ist vorzugsweise in der im Klemmelement vorgesehenen Bohrung eingebracht.

Durch das Vorsehen von Innengewinden sowohl im Werkzeughalter als auch im Klemmelement lassen sich mittels der Schraube hohe Klemmkräfte übertragen. Klemmelement und Schneideinsatz verbleiben somit auch bei hohen auftretenden Bearbeitungskräften sicher in ihrer montierten Position.

Gemäß einer Ausgestaltung ist es insbesondere bevorzugt, dass das erste Außengewinde gegenläufig zu dem zweiten Außengewinde ist.

Die Schraube weist gemäß dieser Ausgestaltung also zwei zueinander gegenläufige Außengewinde auf, welche im Bereich der Mitte der Schraube vorzugsweise durch eine Umfangsnut voneinander getrennt sind. Derartige Schrauben werden häufig auch als Differenzialschrauben bezeichnet. Es versteht sich, dass das im Werkzeughalter vorgesehene erste Innengewinde und das im Klemmelement vorgesehene zweite Innengewinde korrespondierend zu den beiden Außengewinden der Schraube gemäß dieser Ausgestaltung ebenfalls gegenläufig zueinander ausgestaltet sind.

Die gegenläufige Ausgestaltung der Innen- bzw. Außengewinde hat den Vorteil, dass das Klemmelement während des Lösens der Differenzialschraube aktiv aus der Schneideinsatzaufnahme hinausgeschoben wird. Klemmelement und Schneideinsatz lassen sich somit während des Schneideinsatz-Austausches leichter entnehmen. Gleichzeitig hat diese Art der Ausgestaltung auch den Vorteil, dass das Klemmelement während des Anziehens der Differenzialschraube bzw. während des Montierens des Klemmelements und des Schneideinsatzes schon mittels weniger Umdrehungen der Differenzialschraube in die Schneideinsatzaufnahme hineingezogen wird.

Das erste und das zweite Außengewinde bzw. das erste und das zweite Innengewinde können auch unterschiedliche Ganghöhen aufweisen. Die lässt sich grundsätzlich mit der gegenläufigen Ausbildung der Außen- bzw. Innengewinde kombinieren. Gemäß einer weiteren Alternative ist es jedoch auch möglich, die beiden Innen- bzw. Außengewinde in diesem Fall gleichläufig auszugestalten.

Gemäß einer weiteren Ausgestaltung ist das Klemmelement aus Stahl und der Schneideinsatz aus Hartmetall. Der Werkzeughalter ist vorzugsweise ebenfalls aus Stahl. Hierdurch wird die Stabilität der Verbindung zwischen Werkzeughalter, Schneideinsatz und Klemmelement verbessert.

Gemäß einer weiteren Ausgestaltung fluchtet eine am vorderen Ende des Klemmelements angeordnete Stirnfläche in montiertem Zustand des Werkzeugs mit einer am werkstückseitigen Ende der unteren Klemmbacke angeordneten Stirnfläche.

Das vordere Ende des Schneideinsatzes, an welchem üblicherweise zumindest eine Schneide angeordnet ist, steht in montiertem Zustand des Werkzeugs vorzugsweise von diesen beiden Stirnflächen hervor. Hierdurch lassen sich während der Bearbeitung unerwünschte Kollisionen zwischen Werkstück und Klemmkeil bzw. Werkzeughalter vermeiden.

Ausführungsbeispiele der Erfindung sind in der Zeichnung dargestellt und werden in der nachfolgenden Beschreibung näher erläutert. Es zeigen:
- Fig. 1: eine perspektivische Ansicht eines Ausführungsbeispiels des erfindungsgemäßen Werkzeugs;
- Fig. 2: eine Seitenansicht des Ausführungsbeispiels des erfindungsgemäßen Werkzeugs;
- Fig. 3: eine Schnittansicht des Ausführungsbeispiels des erfindungsgemäßen Werkzeugs;
- Fig. 4: eine perspektivische Ansicht eines Werkzeughalters des erfindungsgemäßen Werkzeugs gemäß einem Ausführungsbeispiel;
- Fig. 5: eine perspektivische Ansicht eines Schneideinsatzes des erfindungsgemäßen Werkzeugs gemäß einem Ausführungsbeispiel;
- Fig. 6: eine perspektivische Ansicht eines Klemmelements des erfindungsgemäßen Werkzeugs gemäß einem Ausführungsbeispiel; und
- Fig. 7: eine perspektivische Ansicht eines Befestigungselements des erfindungsgemäßen Werkzeugs gemäß einem Ausführungsbeispiel.

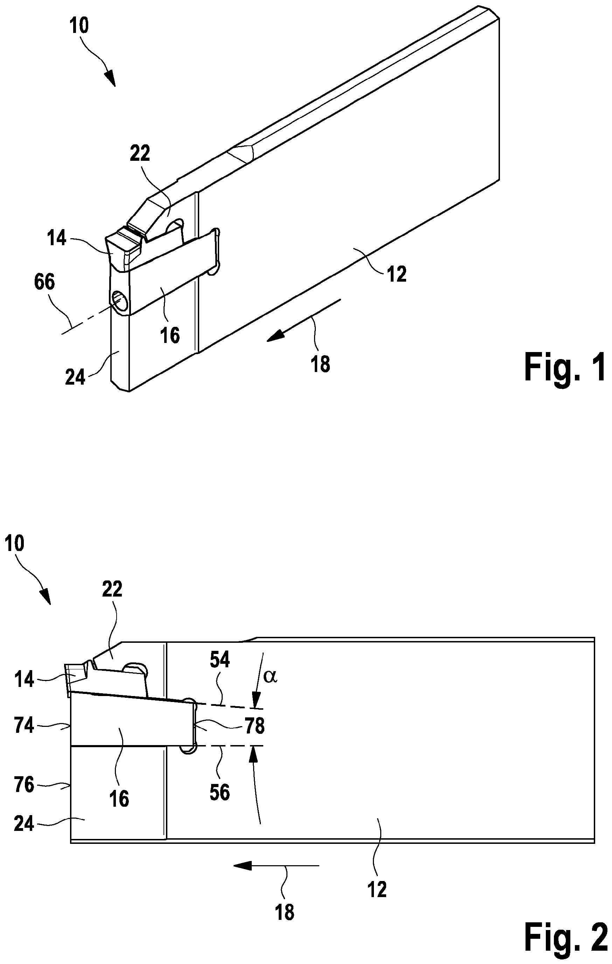

Die Fig. 1 - 3 zeigen ein Ausführungsbeispiel des erfindungsgemäßen Werkzeugs in einer perspektivischen Ansicht, einer Seitenansicht, sowie in einer Schnittansicht. Das erfindungsgemäße Werkzeug ist darin in seiner Gesamtheit mit der Bezugsziffer 10 bezeichnet. Die Fig. 1 - 3 zeigen das erfindungsgemäße Werkzeug 10 in seinem montierten Zustand.

Das Werkzeug 10 weist einen Werkzeughalter 12 und einen austauschbaren Schneideinsatz 14 auf, welcher mit Hilfe eines im Wesentlichen keilförmigen Klemmelements 16 im bzw. am Werkzeughalter 12 befestigbar ist.

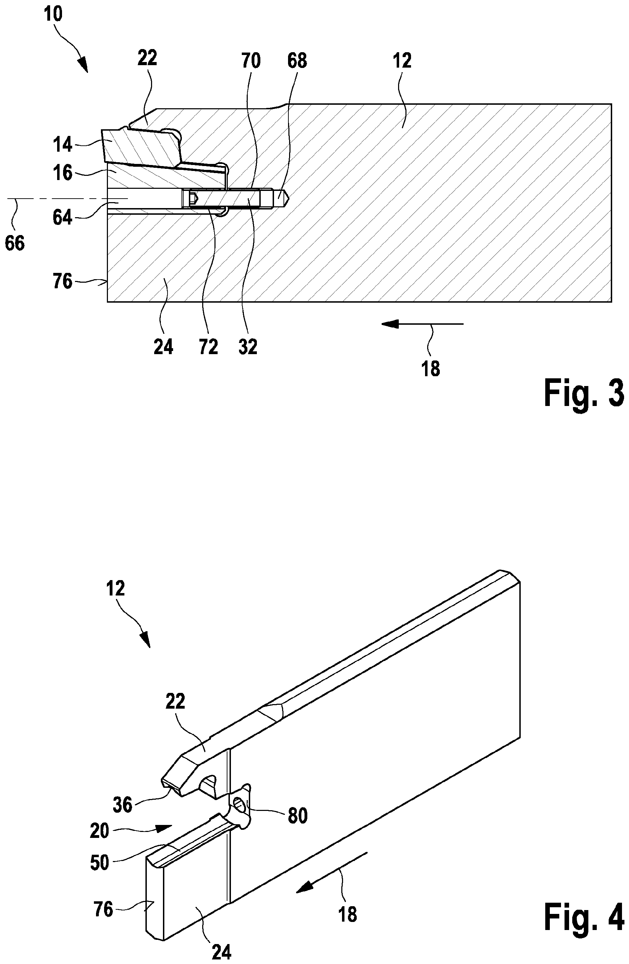

Der Werkzeughalter 12 erstreckt sich im Wesentlichen entlang einer Halterlängsachse 18 und weist im Bereich seines vorderen bzw. werkstückseitigen Endes eine Schneideinsatzaufnahme 20 auf (siehe Fig. 4). Wenngleich diese Aufnahme der Einfachheit halber vorliegend als Schneideinsatzaufnahme 20 bezeichnet wird, dient diese erfindungsgemäß nicht nur zur Aufnahme des Schneideinsatzes 14, sondern auch zur Aufnahme des Klemmelements 16.

Die Schneideinsatzaufnahme 20 wird durch einen oberen Klemmfinger 22 und eine untere Klemmbacke 24 definiert. Der obere Klemmfinger 22 und die untere Klemmbacke 24 liegen einander gegenüber, sodass diese gemeinsam eine im Wesentlichen maulförmige Aufnahme bilden. Sowohl der obere Klemmfinger 22 als auch die untere Klemmbacke 24 sind vorzugsweise starr ausgestaltet. Der obere Klemmfinger 22 lässt sich also, im Gegensatz zu den meisten, aus dem Stand der Technik bekannten Werkzeugen dieser Art, nicht zum Montieren des Schneideinsatzes 24 nach oben hin aufspreizen. Es versteht sich jedoch, dass es insbesondere bei sehr hohen Bearbeitungskräften dennoch zu kleineren elastischen Verformungen des oberen Klemmfingers kommen kann, welche jedoch nicht beabsichtigt, geschweige denn für die Montage notwendig sind. Eine elastische Verformung des oberen Klemmfingers ist jedenfalls für die Klemmung des Schneideinsatzes nicht notwendig und durch den fehlenden Trennschlitz vernachlässigbar klein. Vorzugsweise ist der obere Klemmfinger 22 kleiner ausgestaltet als die untere Klemmbacke 24, da Letztere einen Großteil der Bearbeitungskräfte während der spanenden Bearbeitung aufnehmen muss.

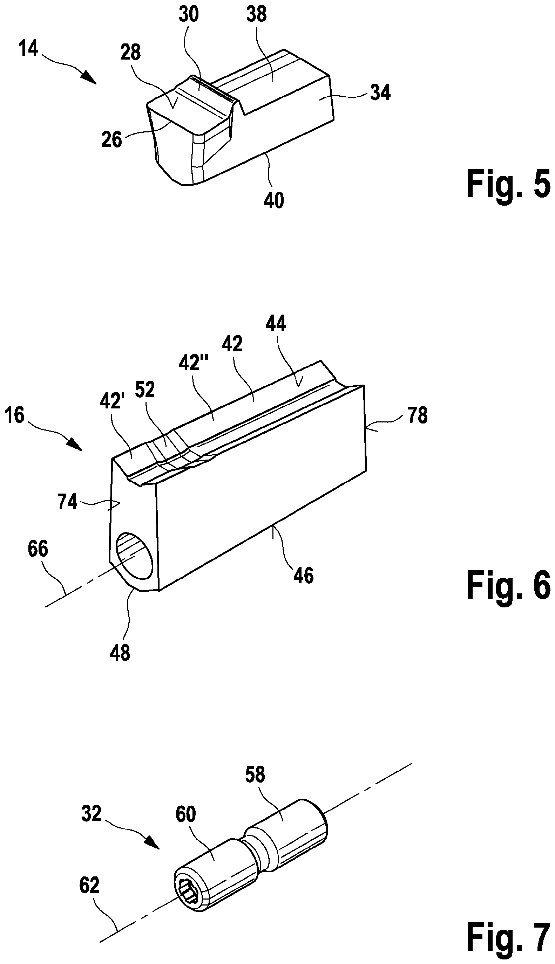

Der Schneideinsatz 14 weist zumindest eine Schneide 26 auf (siehe Fig. 5), mit Hilfe derer das Werkzeug 10 das Werkstück (nicht gezeigt) während der spanenden Bearbeitung kontaktiert und spanabhebend bearbeitet. Es versteht sich, dass der Schneideinsatz 14 grundsätzlich mehrere Schneiden (Haupt- und Nebenschneiden) aufweisen kann. Angrenzend an die Schneide 26 weist der Schneideinsatz 14 an seiner Oberseite eine Spanfläche 28 auf, die zur Spanleitung und Spanformung dient. Je nach Anwendungszweck kann diese Spanfläche 28 grundsätzlich verschiedenste Spanformgeometrien aufweisen. An dem der Schneide 26 gegenüberliegenden hinteren Ende der Spanfläche 28 ist vorzugsweise eine Spanleitstufe 30 angeordnet, welche schräg bzw. quer zur Spanfläche 28 verläuft (siehe Fig. 5). Der Span fließt demnach während der Bearbeitung von der Schneide 26 über die Spanfläche 28 und schließlich über die Spanleitstufe 30 nach oben hin über das vordere Ende des Klemmfingers 22 ab.

Das erfindungsgemäße Werkzeug 10 zeichnet sich im Wesentlichen durch die spezielle Art der Einspannung des Schneideinsatzes 14 im Werkzeughalter 12 aus. Zur Einspannung des Schneideinsatzes 14 wird erfindungsgemäß das Klemmelement 16 verwendet. Ein Ausführungsbeispiel des Klemmelements 16 ist im Detail in Fig. 6. Sowohl der Schneideinsatz 14 als auch das Klemmelement 16 werden erfindungsgemäß als separate, austauschbare Bauteile bereitgestellt.

Das im Wesentlichen keilförmige Klemmelement 16 lässt sich mit Hilfe eines Befestigungselements 32 in der Schneideinsatzaufnahme 20 des Werkzeughalters 12 anbringen bzw. befestigen. Das Befestigungselement 32 ist als Schraube ausgestaltet. Ein Ausführungsbeispiel dieses Befestigungselements 32 ist in Fig. 7 dargestellt.

In montiertem Zustand des Werkzeugs 10 ist das Klemmelement 16 unterhalb des Schneideinsatzes 14 angeordnet und zwischen dem Schneideinsatz 14 und der unteren Klemmbacke 24 festgeklemmt (siehe Fig. 1 - 3). Der Schneideinsatz 14 ist zwischen dem oberen Klemmfinger 22 und dem Klemmelement 16 verklemmt. Genauer gesagt, wird der Schaft 34 des Schneideinsatzes 14 zwischen dem oberen Klemmfinger 22 und dem keilförmigen Klemmelement 16 eingeklemmt. Der obere Klemmfinger 22 weist hierzu an seiner Unterseite eine bzw. mehrere Anlageflächen auf, welche gemeinsam als Anlageabschnitt 36 des oberen Klemmfingers 22 bezeichnet werden (siehe Fig. 4). Dieser Anlageabschnitt 36 korrespondiert mit einem an der Oberseite des Schafts 34 des Schneideinsatzes 14 angeordneten oberen Anlageabschnitt 38, welcher ebenfalls durch eine oder mehrere Flächen gebildet wird.

Vorzugsweise haben die beiden, miteinander korrespondierenden Anlageabschnitte 36, 38 einen prismatischen Querschnitt, welcher im Wesentlichen symmetrisch zur Halterlängsachse 18 bzw. symmetrisch zur Längsachse des Schneideinsatzes 14 ist. In dem vorliegend gezeigten Ausführungsbeispiel ist der Anlageabschnitt 36 des oberen Klemmfingers 22 als nutförmige, prismatische Ausnehmung ausgestaltet (siehe Fig. 4). Der dazu korrespondierende obere Anlageabschnitt 38 des Schneideinsatzes 14 ist hingegen als prismatische Erhöhung ausgestaltet. Grundsätzlich kann dies jedoch auch umgekehrt der Fall sein, so dass der Anlageabschnitt 36 als Erhöhung und der Anlageabschnitt 38 als dazu korrespondierende Nut ausgestaltet ist.

An der Unterseite des Schafts 34 des Schneideinsatzes 14 ist ein unterer Anlageabschnitt 40 angeordnet (siehe Fig. 5), welche ebenfalls einen prismatischen Querschnitt hat. Dieser untere Anlageabschnitt 40 des Schneideinsatzes 14 dient der Anlage am Klemmelement 16. Das Klemmelement 16 weist einen dazu korrespondierenden oberen Anlageabschnitt 42 auf, welcher an der Oberseite 44 des Klemmelements 16 angeordnet ist (siehe Fig. 6). Dieser Anlageabschnitt 42 des Klemmelements 16 hat ebenfalls einen prismatischen Querschnitt und wird durch eine oder mehrere zueinander schräg gestellte Flächen gebildet. Gemäß des gezeigten Ausführungsbeispiels ist der untere Anlageabschnitt 40 des Schneideinsatzes 14 als Außenprisma bzw. Erhöhung ausgestaltet und der obere Anlageabschnitt 42 des Klemmelements 16 als Innenprisma bzw. Nut ausgestaltet. Alternativ ist es jedoch auch hier möglich, den unteren Anlageabschnitt 40 des Schneideinsatzes 14 als Innenprisma und den oberen Anlageabschnitt 44 des Klemmelements 16 als Außenprisma auszugestalten.

An der der Oberseite 44 gegenüberliegenden Unterseite 46 weist das Klemmelement 16 einen unteren Anlageabschnitt 48 auf, welche der Anlage an der unteren Klemmbacke 24 dient. Die untere Klemmbacke 24 weist einen dazu korrespondierenden Anlageabschnitt 50 auf (siehe Fig. 4). Beide Anlageabschnitte 48, 50 haben vorzugsweise wiederum einen prismatischen Querschnitt, welcher durch eine oder mehrere, schräg zueinander gestellte Flächen gebildet wird. Auch hier können die Anlageabschnitte 48, 50 jeweils entweder als prismatische Nut (Innenprisma) oder als prismatische Erhöhung (Außenprisma) ausgestaltet sein.

Die erfindungsgemäße Art der Verklemmung des Schneideinsatzes 14 im Werkzeughalter 12 mit Hilfe des keilförmigen Klemmelements 16 sorgt für einen extrem stabilen Plattensitz, weshalb das Werkzeug 10 auch für die Schwerzerspanung mit hohen auftretenden Bearbeitungskräften gut geeignet ist. Zur besseren Definition der Anlage des Schneideinsatzes 14 am Klemmelement 16 kann am oberen Anlageabschnitt 42, wie in Fig. 6 gezeigt, eine nutförmige Ausnehmung 52 vorgesehen sein. Diese nutförmige Ausnehmung unterteilt den oberen Anlageabschnitt 42 des Klemmelements 16 in einen ersten und einen zweiten Teilabschnitt 42', 42". Auf diese Weise liegt der Schneideinsatz 14 im vorderen Bereich sowie im hinteren Bereich des Klemmelements 16 definiert auf.

Die keilförmige Geometrie des Klemmelements 16 lässt sich insbesondere in den Fig. 2 und 3 erkennen. Wie z.B. der Fig. 2 entnehmbar ist, verläuft der obere Anlageabschnitt 42 des Klemmelements 16 schräg zu dem unteren Anlageabschnitt 48 des Klemmelements 16. Der obere Anlageabschnitt 42 erstreckt sich im Wesentlichen entlang einer ersten Anlageachse 54, welche in montiertem Zustand des Werkzeugs 10 quer, also nicht parallel zur Halterlängsachse 18 des Werkzeughalters 12 verläuft. Der untere Anlageabschnitt 48 des Klemmelements 16 verläuft im Wesentlichen entlang einer zweiten Anlageachse 56, welche in montiertem Zustand des Werkzeugs 10 waagerecht, also parallel zur Halterlängsachse 18 des Werkzeughalters 12 verläuft.

Vorzugsweise schließen die beiden Anlageachsen 54, 56 einen Winkel α kleiner 15° ein. Besonders bevorzugt ist ein Winkel α im Bereich von 5° bis 10°. Eine derartige keilförmige Verjüngung des Klemmelements 16 unter dem genannten Winkel α hat den Vorteil, dass dies zu einer Selbsthemmung des Klemmelements 16 bzw. des Schneideinsatzes 14 führt. Der Schneideinsatz 14 fällt daher auch bei gelöstem Befestigungselement 32 nicht ohne weiteres aus der Schneideinsatzaufnahme 20 heraus.

Die Befestigung des Klemmelements 16 erfolgt, wie bereits erwähnt, mit Hilfe des Befestigungselements 32. Das Befestigungselement 32 ist als Schraube ausgestaltet. Besonders bevorzugt ist das Befestigungselement 32 als Differenzialschraube 32 ausgestaltet, wie beispielhaft in Fig. 7 dargestellt. Die in Fig. 7 dargestellte Differenzialschraube 32 weist auf einer ersten Seite ein erstes Außengewinde 58 und auf einer zweiten Seite ein zweites Außengewinde 60 auf. Diese beiden Außengewinde 58, 60 verlaufen vorzugsweise koaxial zueinander bzw. koaxial zur Längsachse 62 der Differenzialschraube 32. Das erste Außengewinde 58 ist jedoch vorzugsweise gegenläufig zu dem zweiten Außengewinde 60 ausgebildet. Die beiden Außengewinde können grundsätzlich auch unterschiedliche Durchmesser aufweisen.

In montiertem Zustand des Werkzeugs 10 ist die Schraube 32, wie insbesondere in Fig. 3 ersichtlich ist, durch das Klemmelement 16 hindurch in den Werkzeughalter 12 eingeschraubt. Das Klemmelement 16 weist hierzu eine Durchbohrung auf. Die Längsachse 66 der Bohrung 64 verläuft in montiertem Zustand des Werkzeugs 10 parallel zur Halterlängsachse 18.

Die im Klemmelement 16 vorgesehene Bohrung 64 fluchtet in montiertem Zustand des Werkzeugs 10 mit einer im Werkzeughalter 12 vorgesehenen Sacklochbohrung 68. In dieser Sacklochbohrung 68 ist ein erstes Innengewinde 70 vorgesehen, welches mit dem an der Schraube 32 angebrachten ersten Außengewinde 58 korrespondiert. Gemäß des gezeigten Ausführungsbeispiels ist auch in der Durchgangsbohrung 64 des Klemmkeils 16 ein Innengewinde 72 vorgesehen, welches vorliegend als zweites Innengewinde 72 bezeichnet wird. Das zweite Innengewinde 72 korrespondiert mit dem an der Schraube 32 angeordneten zweiten Außengewinde 60. Korrespondierend zu den beiden Außengewinden 58, 60 sind auch die beiden Innengewinde 70, 72 gemäß des vorliegenden Ausführungsbeispiels gegenläufig zueinander ausgestaltet.

Durch die gegenläufige Ausgestaltung der Gewinde 58, 60 bzw. 70, 72 ergeben sich mehrere Vorteile. Zum einen lässt sich das Klemmelement 16 mittels weniger Umdrehungen der Schraube 32 am Werkzeughalter 12 fixieren. Zum anderen ist die Verbindung zwischen Klemmelement 16 und Werkzeughalter 12 dadurch relativ stabil, sodass sich relativ große Klemmkräfte auf den Schneideinsatz 14 übertragen lassen. Hauptsächlich erbringt die Verwendung einer Differenzialschraube 32 jedoch den Vorteil, dass das Klemmelement 16 beim Lösen der Differenzialschraube 32 automatisch aus der Schneideinsatzaufnahme 20 hinausgeschoben wird. Dies vereinfacht den Austausch des Schneideinsatzes 14.

Wenngleich die Verwendung einer solchen Differenzialschraube 32 erfindungsgemäß bevorzugt ist, lässt sich grundsätzlich jedoch auch eine herkömmliche Schraube als Befestigungselement 32 verwenden. In diesem Fall sind die beiden Innengewinde 70, 72 gleichläufig aber mit unterschiedlicher Steigungshöhe ausgestaltet. Grundsätzlich ist es jedoch auch möglich, lediglich ein Innengewinde 70 im Werkzeughalter 12 vorzusehen, wohingegen in der Bohrung 64 des Klemmelements 16 nicht zwingend notwendigerweise ein Innengewinde vorzusehen ist. Im letztgenannten Fall würde es grundsätzlich auch genügen, die Bohrung 64 als Stufenbohrung auszugestalten und eine herkömmliche Schraube zu verwenden, welche mit Ihrem Flansch bzw. Kopf an der Stufe der Stufenbohrung angreift.

Abschließend sei darauf hingewiesen, dass die am vorderen Ende 74 des Klemmkeils 16 angeordnete Stirnfläche in montiertem Zustand des Werkzeugs 10 vorzugsweise mit der am vorderen Ende 76 der unteren Klemmbacke 24 angeordneten Stirnfläche fluchtet (siehe Fig. 2). Die am hinteren Ende 78 des Klemmkeils 16 vorgesehene hintere Stirnfläche, welche der vorderen Stirnfläche gegenüberliegt, weist auf den Grund 80 der Schneideinsatzaufnahme 20 zu, liegt an diesem jedoch nicht an.

## Patentansprüche

1. Werkzeug (10) zur spanenden Bearbeitung eines Werkstücks, mit:
- einem Schneideinsatz (14) mit zumindest einer Schneide (26),
- einem Werkzeughalter (12), welcher sich im Wesentlichen entlang einer Halterlängsachse (18) erstreckt und an einem werkstückseitigen Ende zur Aufnahme des Schneideinsatzes (14) eine Schneideinsatzaufnahme (20) mit einem oberen Klemmfinger (22) und einer unteren Klemmbacke (24) aufweist, und wobei der Werkzeughalter (12) ferner ein erstes Innengewinde (70) aufweist,
- einem im Wesentlichen keilförmigen Klemmelement (16), welches zum Verklemmen des Schneideinsatzes (14) im Werkzeughalter (12) in der Schneideinsatzaufnahme (20) befestigbar ist, wobei das Klemmelement (16) an einer Oberseite (44) einen ersten Anlageabschnitt (42) zur Anlage an dem Schneideinsatz (14) und an einer der Oberseite (44) gegenüberliegenden Unterseite (46) einen zweiten Anlageabschnitt (48) zur Anlage an der unteren Klemmbacke (24) aufweist, wobei sich der erste Anlageabschnitt (42) im Wesentlichen entlang einer ersten Anlageachse (54) und der zweite Anlageabschnitt (48) im Wesentlichen entlang einer zweiten Anlageachse (56) erstreckt, und wobei das Klemmelement (16) eine Durchgangsbohrung (64) aufweist, und
- einer Schraube (32) zum Befestigen des Klemmelements (16) in der Schneideinsatzaufnahme (20) und gleichzeitigen Verklemmen des Schneideinsatzes (14) im Werkzeughalter (12),
wobei das Klemmelement (16) in montiertem Zustand des Werkzeugs (10) zwischen dem Schneideinsatz (14) und der unteren Klemmbacke (24) des Werkzeughalters (12) angeordnet ist und die Schraube (32) durch die Durchgangsbohrung (64) hindurch in das erste Innengewinde (70) eingreift,
**dadurch gekennzeichnet, dass** die erste Anlageachse (54) in montiertem Zustand des Werkzeugs (10) quer zu der Halterlängsachse (18) und die zweite Anlageachse (56) parallel zu der Halterlängsachse (18) des Werkzeughalters (12) verläuft, und dass eine Längsachse (66) der Durchgangsbohrung (64) parallel zu der zweiten Anlageachse (56) verläuft.

2. Werkzeug nach Anspruch 1, wobei das Klemmelement (16) sich ausgehend von einem vorderen Ende (74) entlang einer Längsachse (66) des Klemmelements (16) hin zu einem hinteren Ende (78) erstreckt, wobei die Längsachse (66) in montiertem Zustand des Werkzeugs (10) parallel zur Halterlängsachse (18) ausgerichtet ist und das hintere Ende (78) auf einen Grund (80) der Schneideinsatzaufnahme (20) zuweist, und wobei sich das Klemmelement (16) in seiner Höhe senkrecht zur Längsachse (66) zum hinteren Ende (78) hin keilförmig verjüngt.

3. Werkzeug nach Anspruch 1 oder 2, wobei die erste Anlageachse (54) und die zweite Anlageachse (56) untereinander einen Winkel (α) kleiner 15° einschließen.

4. Werkzeug nach einem der vorhergehenden Ansprüche, wobei der erste Anlageabschnitt (42) eine quer zur ersten Anlageachse (54) verlaufende, nutförmige Ausnehmung (52) aufweist, welche den ersten Anlageabschnitt (42) in zwei Teilabschnitte (42', 42") unterteilt.

5. Werkzeug nach einem der vorhergehenden Ansprüche, wobei der erste und der zweite Anlageabschnitt (42, 48) senkrecht zur Längsachse (66) des Klemmelements (16) betrachtet jeweils einen prismatischen Querschnitt aufweisen.

6. Werkzeug nach einem der vorhergehenden Ansprüche, wobei die Schraube (32) in montiertem Zustand des Werkzeugs (10) parallel zur Halterlängsachse (18) ausgerichtet ist.

7. Werkzeug nach einem der vorhergehenden Ansprüche, wobei die Schraube (32) ein erstes und ein zweites Außengewinde (58, 60) aufweist, wobei das in dem Werkzeughalter (12) angeordnete erste Innengewinde (70) mit dem ersten Außengewinde (58) korrespondiert, und wobei das Klemmelement (16) ein zweites Innengewinde (72) aufweist, welches mit dem zweiten Außengewinde (60) korrespondiert.

8. Werkzeug nach Anspruch 7, wobei das erste Außengewinde (58) gegenläufig zu dem zweiten Außengewinde (60) ist.

9. Werkzeug nach Anspruch 7 oder 8, wobei das erste und das zweite Außengewinde (58, 60) voneinander unterschiedliche Ganghöhen haben.

10. Werkzeug nach einem der vorhergehenden Ansprüche, wobei das Klemmelement (16) aus Stahl ist, und der Schneideinsatz (14) aus Hartmetall ist.

11. Werkzeug nach einem der vorhergehenden Ansprüche, wobei der obere Klemmfinger (22) und die untere Klemmbacke (24) im Wesentlichen starr sind.

12. Werkzeug nach Anspruch 2, wobei eine am vorderen Ende (74) des Klemmelements (16) angeordnete Stirnfläche in montiertem Zustand des Werkzeugs (10) mit einer am werkstückseitigen Ende der unteren Klemmbacke (24) angeordneten Stirnfläche (76) fluchtet.

## Claims

1. A tool (10) for machining a workpiece, having:
- a cutting insert (14) having at least one cutting edge (26),
- a tool holder (12), which extends substantially along a holder longitudinal axis (18) and has at a workpiece-side end a cutting insert receptacle (20) for receiving the cutting insert (14), the cutting insert receptacle (20) having an upper clamping finger (22) and a lower clamping jaw (24), and wherein the tool holder (12) comprises a first internal thread (70),
- a substantially wedge-shaped clamping element (16), which is fastenable in the cutting insert receptacle (20) for wedging the cutting insert (14) in the tool holder (12), wherein the clamping element (16) comprises on a top side (44) a first bearing portion (42) for bearing against the cutting insert (14), and on a bottom side (46) lying opposite the top side (44) a second bearing portion (48) for bearing against the lower clamping jaw (24), wherein the first bearing portion (42) extends substantially along a first bearing axis (54) and the second bearing portion (48) extends substantially along a second bearing axis (56), and wherein the clamping element (16) comprises a through bore (64), and
- a screw (32) for fastening the clamping element (16) in the cutting insert receptacle (20) and for simultaneously wedging the cutting insert (14) in the tool holder (12),
wherein, in the mounted state of the tool (10), the clamping element (16) is disposed between the cutting insert (14) and the lower clamping jaw (24) of the tool holder (12) and the screw (32) engages in the first internal thread (70) through the through bore (64),
**characterized in that**, in the mounted state of the tool, the first bearing axis (54) runs transverse to the holder longitudinal axis (18), and the second bearing axis (56) runs parallel to the holder longitudinal axis (18) of the tool holder (12), and **in that** a longitudinal axis (66) of the through bore (64) runs parallel to the second bearing axis (56).

2. The tool according to claim 1, wherein the clamping element (16), starting from a front end (74), extends along a longitudinal axis (66) of the clamping element (16) through to a rear end (78), wherein, in the mounted state of the tool (10), the longitudinal axis (66) is oriented parallel to the holder longitudinal axis (18), and the rear end (78) is facing a base (80) of the cutting insert receptacle (20), and wherein the clamping element (16) tapers in a wedge shape, in its height perpendicular to the longitudinal axis (66), through to the rear end (78).

3. The tool according to claim 1 or 2, wherein the first bearing axis (54) and the second bearing axis (56) enclose an angle (α) of less than 15° between each other.

4. The tool according to one of the preceding claims, wherein the first bearing portion (42) has a groove-shaped recess (52), which runs transversely to the first bearing axis (54) and which divides the first bearing portion (42) into two segments (42', 42").

5. The tool according to one of the preceding claims, wherein each of the first and the second bearing portion (42, 48) has, viewed perpendicular to the longitudinal axis (66) of the clamping element (16), a prismatic cross section.

6. The tool according to one of the preceding claims, wherein, in the mounted state of the tool (10), the screw (32) is oriented parallel to the holder longitudinal axis (18).

7. The tool according to one of the preceding claims, wherein the screw (32) comprises a first and a second external thread (58, 60), wherein the first internal thread (70) that is arranged in the tool holder (12) corresponds with the first external thread (58), and wherein the clamping element (16) has a second internal thread (72), which corresponds with the second external thread (60).

8. The tool according to claim 7, wherein the first external thread (58) is in opposite sense to the second external thread (60).

9. The tool according to claim 7 or 8, wherein the first and the second external thread (58, 60) have mutually different leads.

10. The tool according to one of the preceding claims, wherein the clamping element (16) is made of steel, and the cutting insert (14) is made of cemented carbide.

11. The tool according to one of the preceding claims, wherein the upper clamping finger (22) and the lower clamping jaw (24) are substantially rigid.

12. The tool according to claim 2, wherein an end face arranged at the front end (74) of the clamping element (16) is, in the mounted state of the tool (10), aligned with an end face (76) that is arranged at the workpiece-side end of the lower clamping jaw (24).

## Revendications

1. Outil (10) pour l'usinage par enlèvement de copeaux d'une pièce, avec :
- un insert de coupe (14) avec au moins une lame (26),
- un porte-outil (12) qui s'étend essentiellement le long d'un axe longitudinal de porte-outil (18) et qui présente, à une extrémité côté pièce, pour recevoir l'insert de coupe (14), un logement d'insert de coupe (20) avec un doigt de serrage supérieur (22) et une mâchoire de serrage inférieure (24), et le porte-outil (12) présentant en outre un premier filetage intérieur (70),
- un élément de serrage (16) essentiellement en forme de coin, qui peut être fixé dans le logement d'insert de coupe (20) pour serrer l'insert de coupe (14) dans le porte-outil (12), l'élément de serrage (16) présentant sur un côté supérieur (44) une première section d'appui (42) pour l'appui sur l'insert de coupe (14) et sur un côté inférieur (46) opposé au côté supérieur (44) une deuxième section d'appui (48) pour l'appui sur la mâchoire de serrage inférieure (24), la première section d'appui (42) s'étendant essentiellement le long d'un premier axe d'appui (54) et la deuxième section d'appui (48) s'étendant essentiellement le long d'un deuxième axe d'appui (56), et l'élément de serrage (16) présentant un alésage traversant (64), et
- une vis (32) pour fixer l'élément de serrage (16) dans le logement d'insert de coupe (20) et serrer simultanément l'insert de coupe (14) dans le porte-outil (12), l'élément de serrage (16) étant agencé, à l'état monté de l'outil (10), entre l'insert de coupe (14) et la mâchoire de serrage inférieure (24) du porte-outil (12) et la vis (32) s'engageant dans le premier filetage intérieur (70) à travers l'alésage traversant (64), **caractérisé en ce que** le premier axe d'appui (54) s'étend, à l'état monté de l'outil (10), transversalement à l'axe longitudinal de porte-outil (18) et le deuxième axe d'appui (56) s'étend parallèlement à l'axe longitudinal de porte-outil (18) du porte-outil (12), et **en ce qu'**un axe longitudinal (66) de l'alésage traversant (64) s'étend parallèlement au deuxième axe d'appui (56).

2. Outil selon la revendication 1, dans lequel l'élément de serrage (16) s'étend à partir d'une extrémité avant (74) le long d'un axe longitudinal (66) de l'élément de serrage (16) vers une extrémité arrière (78), l'axe longitudinal (66) étant orienté parallèlement à l'axe longitudinal de porte-outil (18) à l'état monté de l'outil (10) et l'extrémité arrière (78) étant dirigée vers un fond (80) du logement d'insert de coupe (20), et l'élément de serrage (16) se rétrécissant en forme de coin sur sa hauteur perpendiculairement à l'axe longitudinal (66) vers l'extrémité arrière (78).

3. Outil selon la revendication 1 ou 2, dans lequel le premier axe d'appui (54) et le deuxième axe d'appui (56) forment entre eux un angle (α) inférieur à 15°.

4. Outil selon l'une quelconque des revendications précédentes, dans lequel la première section d'appui (42) présente un évidement (52) en forme de rainure s'étendant transversalement au premier axe d'appui (54), qui divise la première section d'appui (42) en deux sections partielles (42', 42").

5. Outil selon l'une quelconque des revendications précédentes, dans lequel la première et la deuxième section d'appui (42, 48) présentent chacune une section transversale prismatique lorsqu'elles sont considérées perpendiculairement à l'axe longitudinal (66) de l'élément de serrage (16).

6. Outil selon l'une quelconque des revendications précédentes, dans lequel la vis (32) est orientée parallèlement à l'axe longitudinal de porte-outil (18) à l'état monté de l'outil (10).

7. Outil selon l'une quelconque des revendications précédentes, dans lequel la vis (32) présente un premier et un deuxième filetage extérieur (58, 60), le premier filetage intérieur (70) agencé dans le porte-outil (12) correspondant au premier filetage extérieur (58), et l'élément de serrage (16) présentant un deuxième filetage intérieur (72) correspondant au deuxième filetage extérieur (60).

8. Outil selon la revendication 7, dans lequel le premier filetage extérieur (58) est en sens contraire du deuxième filetage extérieur (60).

9. Outil selon la revendication 7 ou 8, dans lequel le premier et le deuxième filetage extérieur (58, 60) ont des pas différents l'un de l'autre.

10. Outil selon l'une quelconque des revendications précédentes, dans lequel l'élément de serrage (16) est en acier, et l'insert de coupe (14) est en métal dur.

11. Outil selon l'une quelconque des revendications précédentes, dans lequel le doigt de serrage supérieur (22) et la mâchoire inférieure (24) sont essentiellement rigides.

12. Outil selon la revendication 2, dans lequel une face frontale agencée à l'extrémité avant (74) de l'élément de serrage (16) est alignée avec une face frontale (76) agencée à l'extrémité côté pièce de la mâchoire inférieure (24) à l'état monté de l'outil (10).
